Europäisches Patentamt

European Patent Office

Office européen des brevets

(11) Publication number: 0 498 374 A2

# EUROPEAN PATENT APPLICATION

(21) Application number: 92101833.9

(51) Int. Cl.⁵: G06F 11/14

(22) Date of filing: 04.02.92

(30) Priority: 08.02.91 JP 17766/91
30.09.91 JP 250686/91

(43) Date of publication of application:
12.08.92 Bulletin 92/33

(84) Designated Contracting States:
DE FR GB IT

(71) Applicant: Kabushiki Kaisha Toshiba
72, Horikawa-cho Saiwai-ku
Kawasaki-shi(JP)
Applicant: TOSHIBA COMPUTER
ENGINEERING CORPORATION
1381-1, Shinmachi
Oome-shi, Tokyo(JP)

(72) Inventor: Yamaki, Kazunori, c/o Intellectual
Prop. Div.
Kabushiki Kaisha Toshiba, 1-1 Shibaura
1-Chome
Minato-ku, Tokyo 105(JP)
Inventor: Sebori, Ryoichi, c/o Intellectual
Prop. Div.
Kabushiki Kaisha Toshiba, 1-1 Shibaura
1-Chome
Minato-ku, Tokyo 105(JP)

(74) Representative: Henkel, Feiler, Hänzel &
Partner
Möhlstrasse 37
W-8000 München 80(DE)

(54) Computer having function of resume process.

(57) In a portable computer having a function of a resume process, a data storage unit is detachably arranged in a computer main body. When a power supply is turned off, data required for performing a resume process is stored in a memory (47) backed up with a battery or in a non-volatile memory (47).

FIG. 1

The present invention relates to a computer having a function of a resume process.

In a personal computer having a resume function, when a resume mode is set as described in Published Unexamined Japanese Patent Application No. 62-169218, upon power ON, an operation can be continued from the immediately preceding state of the power OFF operation in the previous use. In a conventional resume function, the contents of registers such as memories, various LSIs, and units accommodated in a computer are backed up, such that the registers are returned to the immediately preceding state when a power supply is turned on. When this resume function is used, the following advantages can be obtained. That is, a bootloading time in a computer can be reduced, and a time required for loading software or data can be reduced.

In a conventional resume function, however, data required for performing a resume process is stored in an internal memory of a computer. Therefore, when a currently used computer is replaced with another computer, the resume function cannot be used. In another place, a computer is to be used in the same state (when interrupted processing is resumed by a resume function), the currently used computer must be carried to that place, or the software or data must be temporarily stored (normal end processing is performed) in a portable storage device such as a disk medium for an FDD (Floppy Disk Drive) to cause the data to be loaded in another computer. In this case, when an amount of data base is large, a time for storing the data base is long, the number of media is increased. In the above conventional method, a computer must be carried, or a time for storing/loading software or data is disadvantageously long.

It is an object of the present invention to provide a computer for realizing a resume function for another computer if it has the constituting elements as those of the computer for realizing the resume function.

In order to achieve the above object, there is provided a computer having a function of a resume process, comprising: a date storage unit detachably arranged in a computer main body; and means for storing data required for performing the resume process in the data storage unit when a power supplied to the computer is interrupted.

According to the present invention, when a resume mode is designated, and a power supply is turned off, data required for performing a resume process is stored in a memory of a data storage unit which is backed up with a battery or in a non-volatile memory.

Since the data storage unit is detachably arranged in the computer main body by an interface connector or the like, after an operation is finished, the data storage unit can be detached from the main body, carried, and connected to another computer having the same arrangement as that of the computer to which the data storage unit has been detachably arranged. Therefore, in another computer, after the data storage unit is connected to the computer main body, when the power switch of the computer is turned on, a resume function is performed, and the computer is returned to the immediately preceding state of the power OFF operation in the previous use on the basis of the data stored in the data storage unit.

This invention can be more fully understood from the following detailed description when taken in conjunction with the accompanying drawings, in which:

Fig. 1 is a block diagram showing a computer having a function of a resume process according to the first embodiment of the present invention;

Fig. 2 is a perspective view showing the outer appearance of a computer in which a data storage unit A1 shown in Fig. 1 is detachably connected to a computer main body;

Fig. 3 is a flow chart showing a suspend process according to the first embodiment of the present invention;

Fig. 4 is a view showing a setup menu screen for setting a boot mode/resume mode, setting an application change, and setting security according to the first embodiment of the present invention;

Fig. 5 is a block diagram showing a function of selecting a designated storage unit of a plurality of data storage units in response to the application change;

Fig. 6 is a flow chart showing a resume process according to the embodiment of the present invention;

Fig. 7 is a block diagram showing a computer having a function of a resume process according to the second embodiment of the present invention; and

Fig. 8 is a block diagram showing a computer having a function of a resume process according to the third embodiment of the present invention.

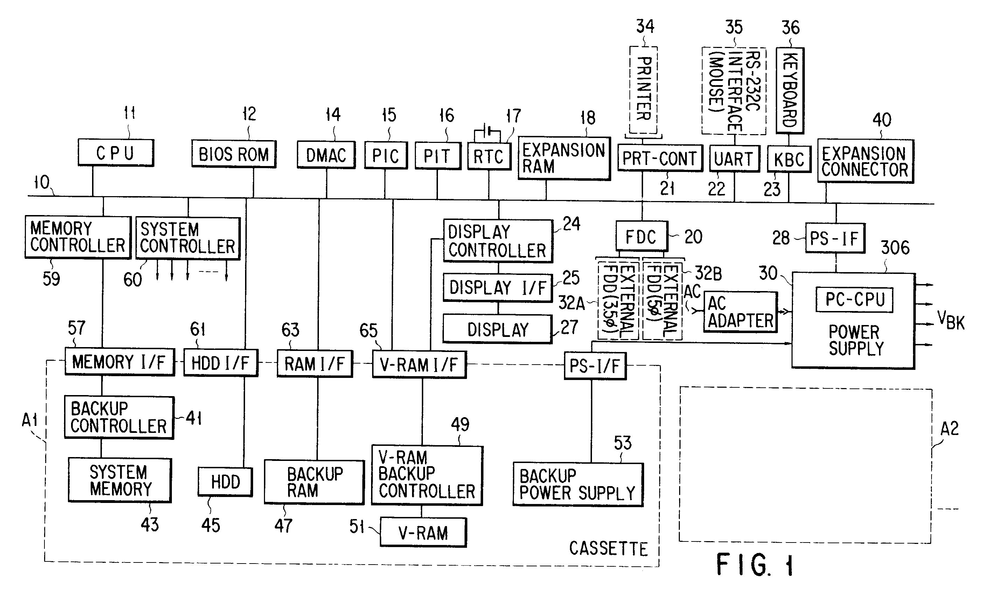

Fig. 1 is a block diagram showing an arrangement of a portable computer having a function of a resume process according to the first embodiment of the present invention.

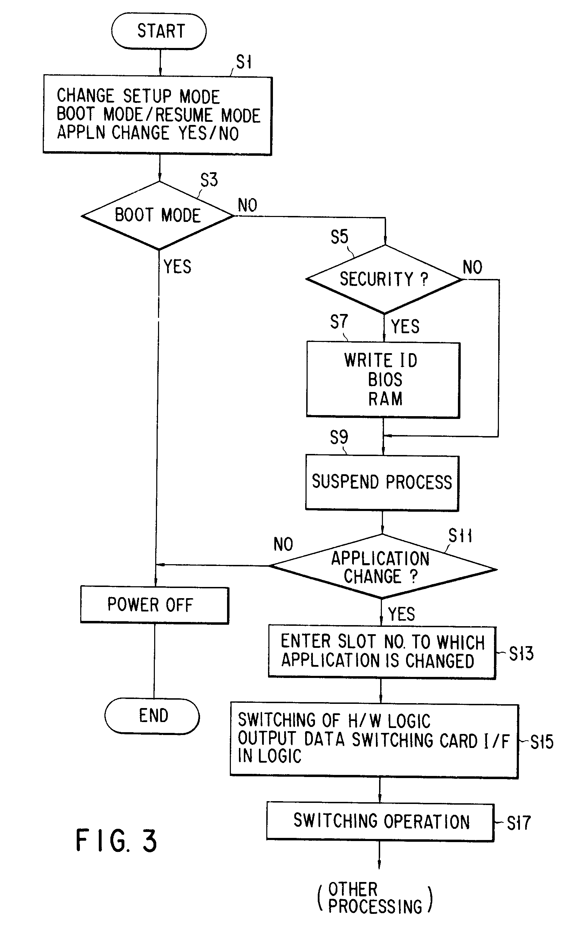

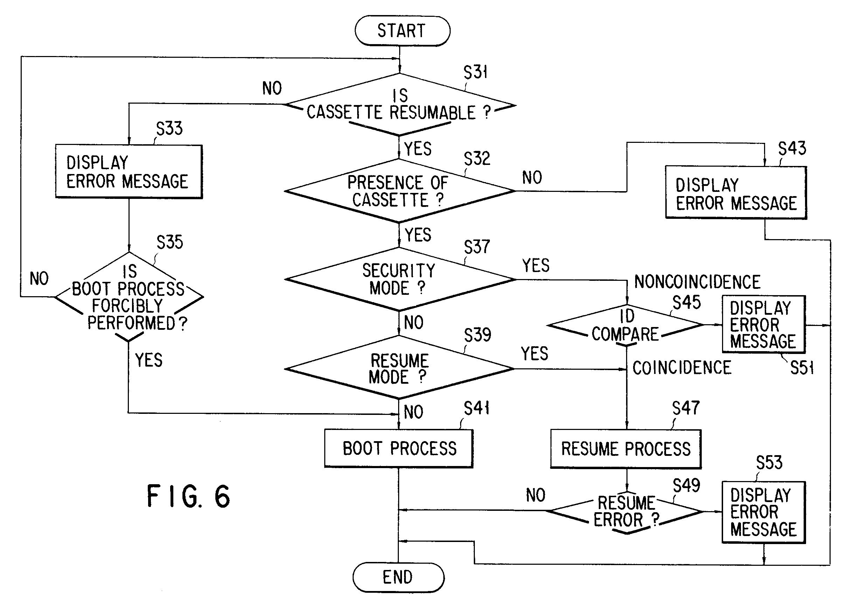

In Fig. 1, reference numeral 10 denotes a system bus, and reference numerals 11 through 28 denote components connected to the system bus 10. These components are the CPU (main CPU) 11 for controlling a whole system, the basic input and output (BIOS) ROM 12 in which a permanent program and the like having control programs shown in Figs. 3 and 6 are stored, the DMA controller 14 for performing direct memory access control, the programmable interruption controller (PIC) 15, the programmable interval timer (PIT) 16, and the timepiece module or RTC (Real Time Clock) 17 having its own operating battery.

These components further include the followings.

In this embodiment, the floppy disk controller (FDD) 20 has two floppy disk drives (FDD (1) and FDD (2)) 32A and 32B as objects to be controlled.

A printer 34 or the like is selectively connected to the printer controller (PRT-CONT) 21 through a connector. An RS-232C interface equipment 35 or the like is connected to the input/output interface (UART: Universal Asynchronous Receiver/Transmitter) 22 as needed. The keyboard controller (KBC) 23 controls an input at a keyboard 36 integrally arranged in a computer main body on which a CPU board is mounted. The display controller 24 is mounted on the frame of a display unit pivotally arranged on the computer main body, and a display device such as a liquid crystal display (LVD), a plasma display (PDP), and a CRT is connected to the display controller 24 through the display interface connector 25. The power supply control interface (PS-IF) 28 connects a power supply circuit 30 to the CPU 11 through the system bus 10 and performs data transfer between the power supply control interface 28 and a power control CPU 306 of the power supply circuit 30 by a serial interface. A power supply adapter (to be referred to as an AC adapter hereinafter) 29 rectifies and smoothes a commercial AC power supply (AC) to obtain a DC operating power supply having a predetermined potential and is plugged in the computer main body. The intelligent power supply (to be referred to as a power supply circuit hereinafter) 30 has the power control CPU (PC-CPU) 306 and supplies an operating power supply to units including a floppy disk drive, a hard disk drive and the like. For example, an external hard disk (external HDD) or the like is selectively connected to an expansion bus connector (EBC) 40 as needed, or the EBC 40 is selectively mounted on an expansion unit having various components (e.g., a keyboard, a CRT display, a large-capacity memory, a personal computer mounting mechanism, and the like) for expanding functions, thereby achieving circuit coupling.

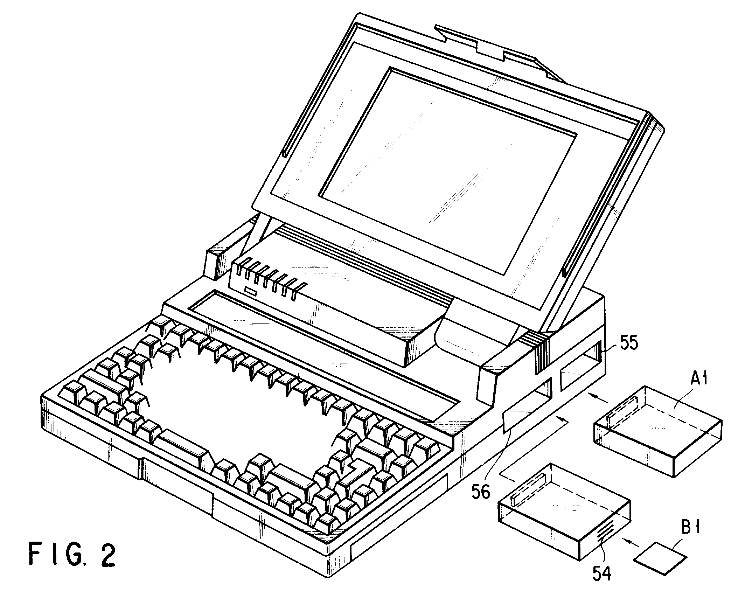

A data storage unit A1 is detachably arranged in the above computer main body through an interface connector. This data storage unit A1 is constituted by a memory backup controller 41, a system memory 43, a hard disk drive (HDD) 45, a backup RAM 47, a V-RAM backup controller 49, a V-RAM (video memory) 51, and a backup power supply 53 which supplies an operating power when the above constituting elements are disconnected from the computer main body. That is, the data storage unit A1 can be detached from the computer main body and freely carried. At this time, the data storage unit A1 is constituted such that all data required for performing a resume process can be stored in a memory which is backed up with a battery. That is, as shown in Fig. 2, the data storage unit A1 has a cassette structure and can be detachably inserted in a slot 55 formed in the computer main body. In the embodiment shown in Fig. 2, although two slots 55 and 56 are formed, three or more slots may be formed.

The system memory 43 in the data storage unit A1 is a memory (RAM) for storing a system program or an application program such as an operating system (OS) and is connected to a memory controller 59 through the memory backup controller 41 and a memory interface connector 57. The memory backup controller 41 is a circuit for storing the content of the system memory 43 by the backup power supply 53 when the system memory 43 is disconnected from the computer main body.

The hard disk drive 45 is connected to the system bus 10 through an HDD interface connector 61.

The backup RAM 47 is a memory for storing a processing result obtained by executing an application program and data of registers in various LSIs in the computer main body when a power supply is turned off. The backup RAM 47 is connected to the system bus 10 through a RAM interface connector 63.

The V-RAM 51 is a memory for storing display data and connected to the system bus 10 and the display controller 24 through a V-RAM interface connector 65. Note that a plurality of data storage units A2 each having the same arrangement as that of the data storage unit A1 are arranged.

An operation of the above embodiment will be described below.

When the system is to be started, the data storage unit A1 shown in Fig. 1 is inserted in the slot 55 or 56 as shown in Fig. 2, and the power supply is turned on. As a result, a boot process is performed, and an OS stored in the HDD 45 is loaded in the system memory 43. An operator inputs a command from a keyboard to execute a desired application program. Although the OS is stored in the HDD 45, the OS may be loaded in the system memory 43 from the floppy disk drive (32A or 32B).

When a resume mode is designated, and a power-OFF operation is performed, the CPU 11 is operated in accordance with a program stored in the BIOS-ROM 12, and data required for performing a resume operation is stored in the backup RAM 47 backed up with a battery. The system memory 43 or the V-RAM 51 is backed up with the memory controller 59 such that the content of the system memory 43 or the V-RAM 51 is not erased. As a result, all the data required for performing the resume process is stored in the data storage unit A1.

The data storage unit A1 can be detached from the computer main body by the interface connectors 57, 61, 63, and 65 and carried. When the data storage unit A1 is connected to a computer having the same arrangement as the computer used in the above embodiment, a resume process can be performed.

That is, when the data storage unit A1 is connected to the computer main body through the interface connectors 57, 61, 63, and 65, and the power supply is turned on, the CPU 11 accesses the BIOS-ROM 12 to perform an initial loading process on the basis of a system boot program including a resume processing routine. In this initial loading process, the CPU 11 checks with reference to the backup RAM 47 whether a resume mode is set. When the resume mode is not set, a normal initial loading process is performed.

When the resume mode is set, the CPU 11 checks the presence/absence of storage data. When the storage data is absent, the normal initial loading process is performed. When the storage data is present, data stored in the backup RAM 47 is read, and data of each function unit (LSI data), system data stored in the V-RAM 51, the system memory 43, and the like are returned to the immediately preceding state of the power OFF operation in the previous use so as to restore the computer in the immediately preceding state of the power OFF operation in the previous use. In addition, data stored in the backup RAM 47 is restored to CPU registers, and control is returned to a program counter and then the system.

According to the above description, a resume process can be performed anywhere at a computer having the same system as described above.

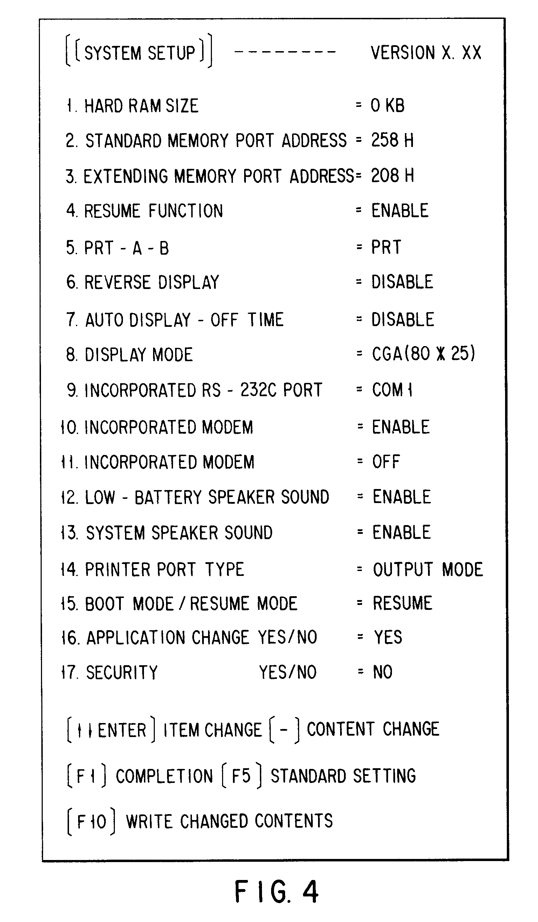

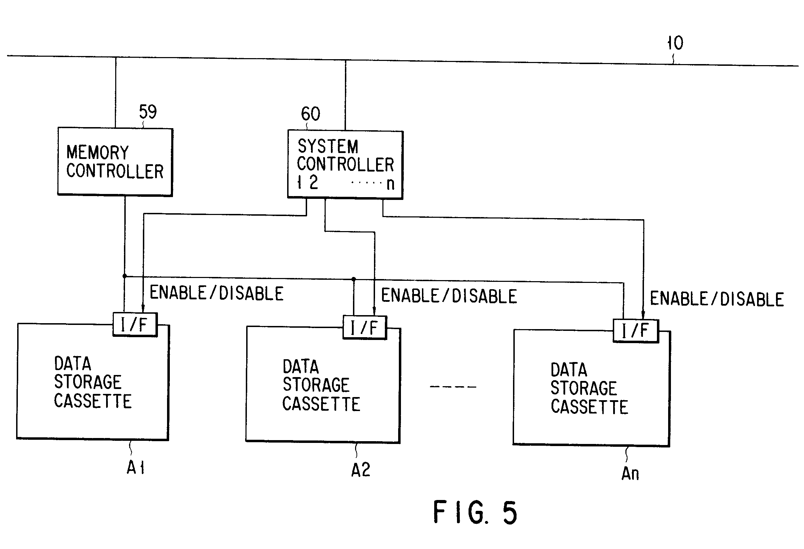

Fig. 3 is a flow chart showing a suspend process according to this embodiment. In step S1, the CPU 11 causes a display device to display a menu screen of a setup process shown in Fig. 4, and the CPU 11 causes an operator to select a boot mode or a resume mode and to input the presence/absence of an application change. In step S3, the CPU 11 determines whether the boot mode is selected. If YES in step S3, the processing is completed. If NO in step S3, the CPU 11 determines in step S5 whether a security mode is set. If YES in step S5, the CPU 11 writes identification data (ID) in the BISO-ROM 12 and the backup RAM 47 in step S7. In step S9, the CPU 11 performs a suspend process. That is, various data required for performing a resume process are stored in the backup RAM 47. In step S11, the CPU 11 determines whether the application change is designated. If YES in step S11, the CPU 11 displays a message in step S13 to perform a key input for changing the current application to an application stored in a specific data storage unit (to enter a slot No. to which an application is changed). In response to the key input, in step S15, the CPU 11 outputs data for switching a cassette interface to a hardware switching logic. As a result, in step S17, a switching operation of cassettes is performed. As the switching logic, for example, output signals from a plurality of data storage units are input to a selector, and only the output signal from the selected data storage unit is selectively output to the system bus 10. That is, as shown in Fig. 5, when an enable or disenable signal is supplied from a system controller 60 to each of the data storage units A1, A2,..., An, a desired data storage unit can be selected.

Fig. 6 is a flow chart showing a resume process. In the step S31, the CPU 11 determines whether a cassette is resumable. If NO in step S31, the CPU 11 displays an error message such as "Not Available" in the step S33. In step S35, the CPU 11 displays a message for selecting whether a forcible boot process is performed and causes an operator to select it. When the forcible boot process is designated (designation of the forcible boot process is performed by, e.g., pushing a specific function key), in step S41, the boot process is performed. On the other hand, if NO in step S35, the CPU 11 is returned to step S31. If YES in step S31, the CPU 11 determines in the step S32 whether a cassette is present. If NO in step S32, an error message such as "Insert Card" is displayed in step S43.

If YES in step S32, the CPU 11 refers to the backup RAM 47 and determines in step S37 whether a security mode is set. If YES in step S37, in step S45, the CPU 11 compares ID data stored in the BIOS-ROM 12 in advance with ID data stored in the backup RAM 47 in the data storage unit A1. If these data do not coincide with each other, the CPU 11 displays an error message such as "This card is not available" in step S51. If these data coincide with each other in step S45, the CPU 11 performs a resume process in step S47. At this time, if a resume error is detected in step S49, the CPU 11 displays an error message such as "Resume Failure" in step S53.

If NO in step S37, the CPU 11 determines in step S39 whether a resume mode is set. If YES in step S39, the CPU 11 advances to step S47 and performs a resume process. The CPU 11 determines in step S49 whether a resume error is detected. In addition, if NO in step S39, the CPU 11 performs a boot process and loads an operating system (OS) on the system memory 43 in the step S41.

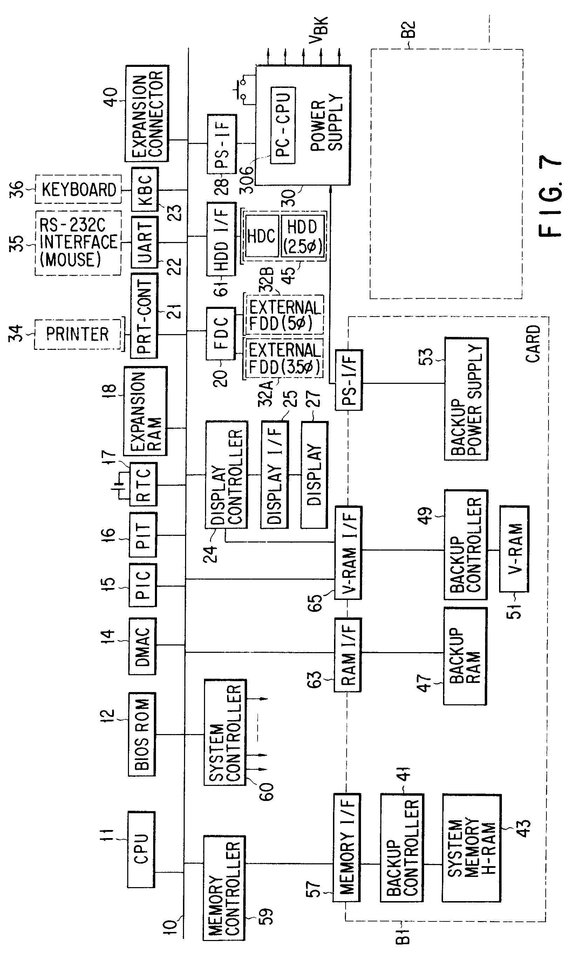

Fig. 7 is a block diagram showing an arrangement of a portable computer according to the second embodiment of the present invention.

In the second embodiment, the hard disk drive 45 and the HDD interface connector 61 of the data storage unit A1 in the first embodiment shown in Fig. 1 are omitted, and a part of the system memory 43 in the first embodiment is used as a RAM disk (a memory region corresponding to a hard disk). This arrangement can be applied to an application program which is programmed such that a processing result is stored in a hard disk drive. In addition, with the above arrangement, a data storage unit B1 can be arranged in the form of a card. In this case, as shown in Fig. 2, the data storage unit B1 is inserted into a box having a plurality of slots 54. Since other parts of the second embodiment have the same arrangement as those of the first embodiment in Fig. 1, the same reference numerals as in Fig. 1 denote the same parts in Fig. 6, and a detailed description thereof will be omitted.

Since the data storage unit B1 has a part of the system memory 43 used as a RAM disk, a hard disk drive 45 having a relatively large storage capacity can be omitted, and the data storage unit B1 can be easily carried, thereby further effectively using a resume function. Note that the RAM disk is described in detail in Published Unexamined Japanese Patent Application Nos. 62-74829 and 1-55639.

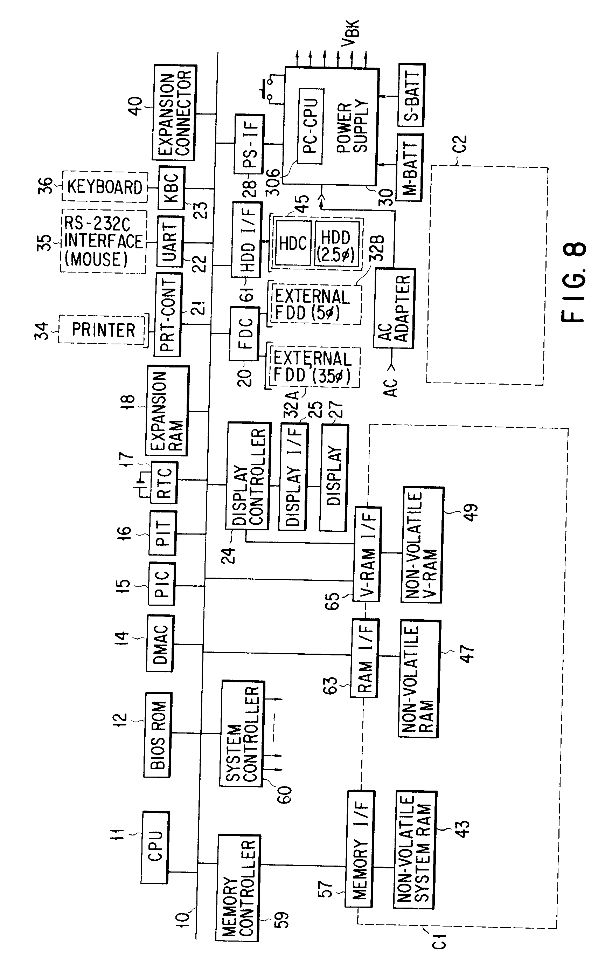

Fig. 8 is a block diagram showing the arrangement of a personal computer according to the third embodiment of the present invention. In the third embodiment, a high-speed non-volatile RAM such as an E-ROM is used as each memory in the data storage unit B1 in the second embodiment. That is, a system memory 43, a backup RAM 47, and a V-RAM 51 are constituted by the high-speed non-volatile RAMs, and a backup power supply 53, a memory backup controller 41, and a V-RAM backup controller 49 are omitted. Other parts have the same arrangement as those of the embodiment in Fig. 7.

As described above, a data storage unit C1 is constituted by the non-volatile RAMs, the backup power supply 53, the memory backup controller 41, and the V-RAM backup controller 49 are unnecessary. Since the data storage unit C1 is constituted by only the system memory 43, the backup RAM 47, and the V-RAM 49, the data storage unit C1 can be arranged in the form of a card. Therefore, the data storage unit C1 can be very easily carried, and a resume function can be further effectively used.

In the above embodiment, a plurality of data storage units are arranged and inserted into the corresponding slots, and the data storage units are switched in response to a switching command for applications. However, the plurality of data storage units may be selectively inserted in one slot to change applications.

In the above embodiment, a system controller is arranged, and an enable/disenable signal output from the system controller is supplied to each interface of display data storage units so as to select one display data storage unit. However, an output enable (OE) signal, a write enable (WE) signal, and a chip select (CS) signal are controlled by a memory controller to select a designated data storage unit.

In addition, in the above embodiment, although an E-ROM is used as a non-volatile RAM, the non-volatile RAM may be constituted by a flash memory or the like.

## Claims

1. A computer having a function of a resume process, comprising:

   a data storage unit (A1, B1, C1) detachably arranged in a computer main body; and

   means (11, 12) for storing data required for performing the resume process in said data storage unit.

2. A computer according to claim 1, characterized in that said storage unit has a memory backed up with a battery and a hard disk drive (45).

3. A computer according to claim 2, characterized in that said data storage unit has a system memory backed up with a battery, and a memory area (43 in Fig. 7) corresponding to a hard disk is formed in a part of said system memory.

4. A computer having a function of a resume process, comprising:

   a data storage unit (C1) detachably arranged in a computer main body and having a non-volatile read/write accessible memory (43, 47, 49); and

   means for storing data required for performing a resume process in the non-volatile memory of said data storage unit.

5. A computer according to claim 2, characterized in that said data storage unit is arranged in a form of a cassette.

6. A computer according to claim 3, characterized in that said data storage unit is arranged in a form of a card.

7. A computer according to claim 4, characterized in that said data storage unit is arranged in a form of a card.

8. A computer according to claim 1, characterized in that said data storage unit is constituted by a plurality of data storage units, and different application programs are respectively stored in said plurality of data storage units, and further comprising:
   means (11, 12, 60) for selecting any one of said plurality of data storage units; and
   means for performing a resume process of said selected data storage unit.

9. A computer according to claim 1, further comprising:
   means (11, 12, 27, 36) for designating one of a boot mode and a resume mode, designating whether an application change is performed, and designating whether a security mode is set;
   means (11, 12, 27, 36) for determining whether the application change is designated in a power OFF state and receiving data representing an application of a designated data storage unit when the application change is designated; and
   means (11, 12, 60) for switching data storage units on the basis of input selection data.

10. A computer according to claim 1, characterized in that said data storage unit includes a system memory (43) for storing a system program having an operating system (OS), a backup memory (47) for storing data required for performing a resume process, and a display memory (49) for storing display data.

11. A computer according to claim 4, characterized in that said data storage unit includes a system memory for storing a system program having an operating system (OS), a backup memory for storing data required for performing a resume process, and a display memory for storing display data.

12. A computer having a function of a resume process, comprising:
   a data storage unit (A1, B1, C1) detachably arranged in a computer main body;
   means (11, 12) for storing data required for performing the resume process in said storage unit;
   means (11, 12, 27, 36) for setting a security mode;

means (11, 12) for storing identification data in each of said data storage unit and said computer main body when the security mode is set;
   means (11, 12) for comparing the identification data stored in said computer main body with the identification data stored in said data storage unit when the resume process is to be performed; and
   means (11, 12) for performing the resume process only when the identification data stored in said computer main body coincides with the identification data stored in said data storage unit.

13. A computer having a function of a resume process, comprising:
   a system bus (10);
   a plurality of slots (55, 56);
   a plurality of data storage units (A1... An, B1... Bn, C1... Cn) detachably inserted in said plurality of slots, each of said data storage units being installed with an application program;
   means (11, 12, 27) for inquiring to an operator whether an application is to be changed;
   means (11, 12, 36) for selecting one slot to switch a current application to an application program of said one slot designated by an application change when the application change is designated; and
   means for connecting a data storage unit inserted in the selected slot to said system bus.

14. A computer having a function of a resume process comprising:
   a data storage unit (A1, B1, C1) detachably arranged in a computer main body;
   means (11, 12) for storing data required for performing the resume process in said data storage unit;
   means (11, 12, 27, 36) for inquiring to an operator whether a forcible boot process is performed when the resume process is to be performed and a data storage unit which is not resumable is set in said computer main body; and
   means (11, 12) for performing the forcible boot process in response to designation of the forcible boot process.

FIG. 1

EP 0 498 374 A2

FIG. 2

55

A1

56

B1

54

FIG. 3

Flowchart:

START
↓
S1 — CHANGE SETUP MODE / BOOT MODE/RESUME MODE / APPLN CHANGE YES/NO
↓
S3 — BOOT MODE
- YES → POWER OFF → END
- NO → S5 — SECURITY ?
  - YES → S7 — WRITE ID / BIOS / RAM → S9
  - NO → S9 — SUSPEND PROCESS
↓
S11 — APPLICATION CHANGE ?
- NO → POWER OFF → END
- YES → S13 — ENTER SLOT NO. TO WHICH APPLICATION IS CHANGED
↓
S15 — SWITCHING OF H/W LOGIC / OUTPUT DATA SWITCHING CARD I/F IN LOGIC
↓
S17 — SWITCHING OPERATION
↓
(OTHER PROCESSING)

9

```
[[SYSTEM SETUP]]  --------      VERSION X. XX

 1. HARD RAM SIZE                    = O KB

 2. STANDARD MEMORY PORT ADDRESS = 258 H

 3. EXTENDING MEMORY PORT ADDRESS= 208 H

 4. RESUME FUNCTION                = ENABLE

 5. PRT - A - B                    = PRT

 6. REVERSE DISPLAY                = DISABLE

 7. AUTO DISPLAY - OFF TIME        = DISABLE

 8. DISPLAY MODE                   = CGA(80 X 25)

 9. INCORPORATED RS - 232C PORT    = COM 1

10. INCORPORATED MODEM             = ENABLE

11. INCORPORATED MODEM             = OFF

12. LOW - BATTERY SPEAKER SOUND    = ENABLE

13. SYSTEM SPEAKER SOUND           = ENABLE

14. PRINTER PORT TYPE              = OUTPUT MODE

15. BOOT MODE / RESUME MODE        = RESUME

16. APPLICATION CHANGE YES/NO      = YES

17. SECURITY          YES/NO       = NO


[↑↓ ENTER] ITEM CHANGE [-] CONTENT CHANGE

[F1] COMPLETION [F5] STANDARD SETTING

[F10] WRITE CHANGED CONTENTS
```

## F I G. 4

FIG. 5

FIG. 6

START

S31
IS CASSETTE RESUMABLE ?

NO → S33 DISPLAY ERROR MESSAGE → S35 IS BOOT PROCESS FORCIBLY PERFORMED ?
NO → (back to START)
YES → (to BOOT PROCESS)

YES

S32
PRESENCE OF CASSETTE ?
NO → S43 DISPLAY ERROR MESSAGE

YES

S37
SECURITY MODE ?
YES → NONCOINCIDENCE → S45 ID COMPARE → S51 DISPLAY ERROR MESSAGE
COINCIDENCE

NO

S39
RESUME MODE ?
YES → COINCIDENCE → S47 RESUME PROCESS → S49 RESUME ERROR ? → S53 DISPLAY ERROR MESSAGE
NO → RESUME ERROR ? NO

NO

S41
BOOT PROCESS

END

EP 0 498 374 A2

FIG. 7

EP 0 498 374 A2

FIG. 8